(19) Europäisches Patentamt / European Patent Office / Office européen des brevets

(11) **EP 2 771 181 B1**

(12) **FASCICULE DE BREVET EUROPEEN**

(45) Date de publication et mention de la délivrance du brevet:
**13.01.2016 Bulletin 2016/02**

(21) Numéro de dépôt: **12778334.8**

(22) Date de dépôt: **24.10.2012**

(51) Int Cl.:
**B32B 3/02** *(2006.01)*     **F16F 15/00** *(2006.01)*
**B32B 5/26** *(2006.01)*     **B29C 70/28** *(2006.01)*

(86) Numéro de dépôt international:
**PCT/EP2012/071016**

(87) Numéro de publication internationale:
**WO 2013/060704 (02.05.2013 Gazette 2013/18)**

(54) **ARCHITECTURE DE ROUE D'INERTIE POUR LE STOCKAGE D'ENERGIE**

SCHWUNGRADARCHITEKTUR ZUR SPEICHERUNG

INERTIA WHEEL ARCHITECTURE FOR STORING ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2011 FR 1159653**

(43) Date de publication de la demande:
**03.09.2014 Bulletin 2014/36**

(73) Titulaires:
• **European Aeronautic Defence and Space Company**
  **EADS France**
  **Airbus Group SAS**
  **75016 Paris (FR)**
• **Levisys**
  **92136 Issy les Moulineaux (FR)**

(72) Inventeurs:
• **CAVALIERE, Frédéric**
  **F-78180 Montigny Le Bretonneux (FR)**
• **ALIAGA, Daniel**
  **F-93300 Aubervilliers (FR)**
• **SAINT MLEUX, Michel**
  **F-83230 Bormes Les Mimosas (FR)**

(74) Mandataire: **Ipside**
  **7-9 Allées Haussmann**
  **33300 Bordeaux Cedex (FR)**

(56) Documents cités:
EP-A2- 0 794 352     WO-A1-02/37201
WO-A1-2005/021379     US-A- 5 946 979

EP 2 771 181 B1

**Description**

La présente invention concerne une architecture de roue d'inertie pour le stockage d'énergie.

Des dispositifs de stockage et de restitution d'énergie par roue d'inertie sont connus et par exemple le document WO2005021379 A1 concerne une roue d'inertie notamment pour véhicule spatial comprenant une masse d'inertie montée en rotation par un palier à un roulement dont la partie fixe est destinée à être fixée sur le véhicule spatial, la masse d'inertie de la roue intégrant au moins une bague tournante du palier, la bague tournante étant rendue solidaire sans jeu de la masse d'inertie.

Une application d'une roue d'inertie est en outre décrite dans le document WO2009047218 A1 qui concerne un dispositif de motorisation de pompe d'alimentation de moteur fusée de véhicule spatial comprenant une roue d'inertie et un moyen de transmission de la rotation de la roue d'inertie à la pompe.

La présente invention concerne une architecture de roue d'inertie en matériaux composite permettant d'optimiser la densité d'énergie c'est-à-dire le ratio Energie stockée / Poids de la roue.

Outre les applications particulières spatiales citées ci-dessus, le besoin de stockage d'énergie pour réguler la fréquence d'un réseau électrique, pour stabiliser les micro-réseaux ou les réseaux intelligents ou pour éviter les interruptions (alimentations sans interruption) va être croissant dans les années à venir. Pour ce stockage, comparativement à un stockage par batteries, les roues d'inertie présentent notamment l'intérêt d'une réponse rapide avec une très grande durée de vie (nombre de cycles avec une grande profondeur de charge-décharge).

Cependant, les roues présentent souvent les inconvénients d'une part, d'avoir une auto décharge importante et d'autre part d'avoir un coût élevé dû en partie au coût des fibres de carbone utilisées dans le matériau composite qui stocke l'énergie.

Afin de limiter ces inconvénients, il y a lieu de limiter le poids des roues autant que faire ce peut, autrement dit d'augmenter la densité d'énergie stockée c'est-à-dire d'optimiser le ratio : Energie stockée / Poids de la roue.

Les roues d'inertie existent déjà pour le même type d'applications. La société américaine BEACON propose des roues d'inertie à anneau de stockage en matière composite comme décrit dans le document WO03/026882 A1 et comportant un moyeu métallique comme par exemple décrit dans le document WO02/37201 A1.

Les roues utilisent des cylindres en composites bobinés formant des anneaux de stockage de l'énergie, qui présentent un rayon interne petit et qui sont directement montés sur des moyeux métalliques.

Cette configuration possède un ratio Energie stockée / masse de la roue limitée du fait que les moyeux métalliques atteignent rapidement leurs limites technologiques lorsque le diamètre interne de l'anneau de stockage de la roue est accru.

De plus le design de ces roues où le ratio $R_{intérieur}/R_{extérieur} < 0.5$ conduit à avoir des contraintes radiales ($\sigma_{rr}$) élevées qui limitent la vitesse de rotation. Ce dernier inconvénient est atténué en utilisant des fibres différentes qui ont des rigidités variables, les fibres les moins rigides étant positionnées plus prés de l'axe de rotation (sur les petits rayons).

La solution sur laquelle se base la présente invention a pour but d'accroître le ratio Rintérieur /Rextérieur.

Afin d'optimiser ce ratio, la présente invention propose une conception particulière de la roue qui consiste à placer le matériau de stockage, par exemple un anneau composite à fibres de carbone, le plus distant possible de l'axe de rotation de la roue.

Pour pallier aux problèmes de tenue mécanique du moyeu reliant l'anneau la présente invention propose de réaliser un moyeu en matériaux composites et plus précisément propose une roue d'inertie comportant un anneau de stockage et un moyeu reliant l'anneau de stockage à un arbre de rotation de la roue, pour laquelle le moyeu comporte une partie centrale formant un corps de moyeu de liaison avec l'arbre, une partie périphérique formant une jante de liaison avec l'anneau de stockage et une partie intermédiaire constituée d'un disque entre le corps de moyeu et la jante, le moyeu étant réalisé en matériau composite et comporte un module de raideur décroissant depuis le corps de moyeu vers la jante.

Le moyeu est avantageusement réalisé par drapage et mise en forme de plis composites.

Préférablement, le drapage réalise un motif comportant un nombre de plis superposés moyen décroissant du corps de moyeu vers la partie périphérique de la jante.

Selon un mode de réalisation particulier de l'invention, le drapage comporte une succession de plis décalés angulairement se recouvrant au moins dans la partie centrale du moyeu.

Le corps de moyeu comporte avantageusement une découpe de réception de l'arbre.

Selon un mode de réalisation particulier de l'invention, le corps de moyeu est réalisé par emboutissage de la partie centrale du moyeu.

La jante est avantageusement réalisée par courbure de la périphérie du disque.

Plus particulièrement le corps de moyeu forme un tube, de réception de l'arbre, solidaire de l'arbre et est relié à l'une de ses extrémités au disque par une première courbure, la jante étant reliée au disque par une seconde courbure de même sens que la première courbure.

Avantageusement, la seconde courbure forme une liaison souple entre le disque et la jante conférant une module d'élasticité radial à la jante adapté pour permettre une déformation de celle-ci pour suivre les déformations de l'anneau de stockage en rotation.

Le moyeu est préférablement réalisé par drapage avec des plis dont les fibres sont majoritairement orientées radialement par rapport au centre du moyeu.

Selon un mode de réalisation particulièrement avantageux, le drapage est réalisé avec des plis formés par des bandes longitudinales disposées avec un décalage angulaire des unes par rapport aux autres et centrées sur le centre du moyeu.

Les bandes longitudinales sont avantageusement de forme générale rectangulaire voire trapézoïdale.

Avantageusement, le corps de moyeu est avantageusement constitué d'une zone de recouvrement de l'ensemble des plis, le disque est constitué par une zone recouvrement réduit des plis et la jante est constituée par une zone de recouvrement minimal des plis.

Selon un mode de réalisation particulièrement avantageux de l'invention, l'orientation des fibres des plis confère une module d'élasticité circonférentiel à la jante adapté pour permettre une déformation de celle-ci pour suivre les déformations de l'anneau de stockage en rotation. Ceci est important notamment dans le cas où les plis se recouvrent dans la zone de la jante.

Le moyeu comprend préférablement une partie périphérique souple dont la raideur circonférentielle est réduite par rapport au centre du moyeu de façon à ce que la jante suive les déformations de l'anneau de stockage.

L'invention concerne en outre selon un premier mode de réalisation un procédé de réalisation d'une roue d'inertie comportant un moyeu en matériau composite qui comporte:

- une étape de réalisation d'une ébauche plane du moyeu par dépose de plis composites selon un motif produisant une épaisseur moyenne de l'ébauche se réduisant du centre vers la périphérie de l'ébauche,
- une étape de découpe d'une ouverture centrale dans l'ébauche;
- une étape d'emboutissage de l'ébauche dans un outil conformant l'ébauche en coupelle munie en son centre d'un corps de moyeu annulaire et à sa périphérie d'une jante et,
- une étape de polymérisation du moyeu.

Dans le cas où les plis composites étant des bandes longitudinales, la dépose des plis composites se fait par pose des bandes centrées sur le centre du moyeu avec un décalage angulaire des bandes les unes par rapport aux autres.

Préférablement, après l'étape d'emboutissage, on réalise une étape de détourage de l'ébauche.

Selon un second mode de réalisation, l'invention concerne un procédé de réalisation d'une roue d'inertie comportant un moyeu en matériau composite selon l'une quelconque des revendications 1 à 15 caractérisé en ce qu'il comporte:

- une étape de réalisation d'une ébauche du moyeu par dépose de plis composites (4a, 4b, 4c, 4d) selon un motif produisant une épaisseur moyenne de l'ébauche se réduisant du centre vers la périphérie de l'ébauche sur un moule torique conformant l'ébauche en coupelle munie en son centre d'un corps de moyeu (2a) annulaire et à sa périphérie d'une jante (2c),
- une étape de découpe d'une ouverture centrale (5) dans l'ébauche; et
- une étape de polymérisation du moyeu.

Le procédé comporte avantageusement une étape d'emmanchement du corps de moyeu sur un arbre de rotation de la roue.

Le procédé comporte avantageusement une étape de frettage du corps de moyeu sur l'arbre.

Le procédé comporte avantageusement une étape d'emmanchement de l'anneau de la roue sur la jante du moyeu.

Pour les roues de hauteur importante, le procédé comporte une étape d'emmanchement d'au moins un second moyeu de même orientation sur l'arbre et dans l'anneau.

D'autres caractéristiques et avantages de l'invention seront apparents à la lecture de la description d'un exemple de réalisation non limitatif de l'invention qui suit en référence aux dessins qui représentent:

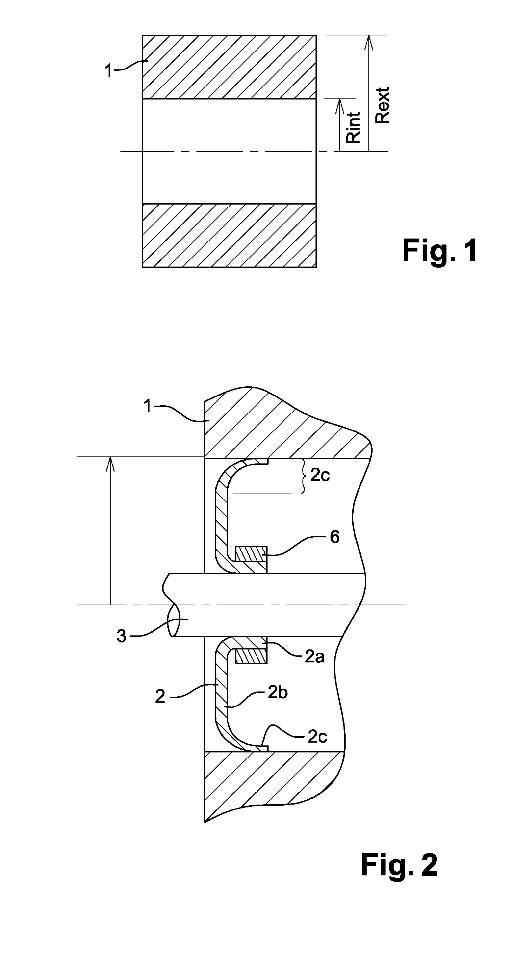

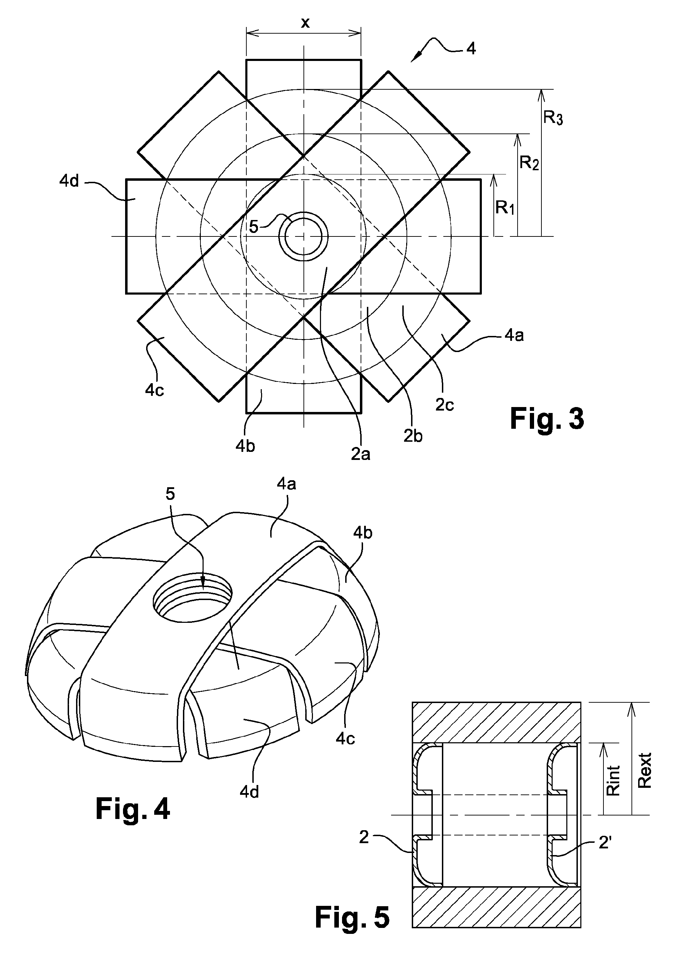

en figure 1: une vue schématique en coupe d'un anneau de stockage d'énergie de l'invention,
en figure 2: une vue schématique d'une ébauche de moyeu selon un mode de réalisation particulier de l'invention;
en figure 3: une vue en coupe d'une roue comportant un moyeu selon l'invention;
en figure 4: une vue en perspective schématique d'un moyeu de l'invention;
en figure 5: une vue en coupe d'une roue munie de deux moyeux de l'invention.

L'invention s'applique à une roue d'inertie comportant un anneau de stockage 1 comme représenté en figure 1.

La conception de la roue d'inertie de l'invention consiste à placer le matériau de stockage, notamment un composite à fibres de carbone, le plus distant possible de l'axe de rotation de la roue.

Avec cette conception, en ne considérant que le cylindre en matériau composite, l'énergie stockée par Kg de roue peut s'approximer par la relation:

$$E/masse = (\sigma_{max}/2\rho) \times ((R^2_{int} + R^2_{ext})/2R^2_{ext})$$

Où $\sigma_{max}$ est la contrainte maximale que peut supporter le matériau composite dans le sens circonférentiel et p la masse volumique de ce matériau.

Dans la solution proposée, comme dans les solutions usuelles, le cylindre en matériaux composite formant l'anneau de stockage est obtenu par bobinage de fibres pré-imprégnées.

Les fibres de carbone sont choisies préférentiellement.

L'angle de bobinage est constant ou diminue en allant vers les couches externes du cylindre.

Cette variation de l'angle de bobinage permet avantageusement d'avoir un matériau composite moins rigide sur les couches internes du cylindre.

Dans l'invention, le moyeu est composé de fibres orientées dans le plan perpendiculaire à l'axe de rotation de la roue comprend une partie souple dont la raideur radiale est diminuée de façon à suivre les déformations du cylindre sans présenter de trop fortes contraintes.

Ainsi le design proposé permet de stocker l'énergie dans des cylindres présentant des ratios $(R^2_{int}+R^2_{ext})/2R^2_{ext}$ > 0,8 alors que les roues usuelles présentent des ratios inférieurs à 0,7.

Les ratios de la présente invention avec un composite à fibres de carbone permettent d'obtenir, voir de dépasser les 55 W.h par Kg alors que les roues actuelles sont limitées à environ 40 W.h par Kg.

Le moyeu 2 représenté en coupe à la figure 2, comporte une partie centrale formant un corps de moyeu 2a de liaison avec un arbre 3 de rotation de la roue, une partie périphérique formant une jante 2c de liaison avec l'anneau de stockage et une partie intermédiaire constituée d'un disque 2b entre le corps de moyeu et la jante, est réalisé en matériau composite et comporte un module de raideur décroissant depuis le corps de moyeu vers la jante.

Le moyeu est conçu pour être très rigide au niveau du rayon intérieur près de l'arbre afin de ne pas se décoller de l'arbre pendant la rotation, tandis qu'il est plus souple au niveau du rayon extérieur de façon à bien suivre les déformations de l'anneau ou cylindre de stockage d'énergie.

Le moyeu selon l'exemple est réalisé par drapage et mise en forme de plis composites 4 et le drapage réalise un motif comportant un nombre de plis superposés moyen décroissant du corps de moyeu vers la partie périphérique de la jante.

Le drapage peut être réalisé avec des plis sous forme de disques de diamètre croissant empilés de manière concentrique mais selon l'exemple représenté en figure 3 on choisit un drapage qui comporte une succession de plis décalés angulairement se recouvrant dans la partie centrale du moyeu.

Selon l'exemple, quatre plis 4a, 4b, 4c, 4d sous forme de bandes longitudinales rectangulaires décalés de 45° sont disposés les uns sur les autres.

Dans la partie du corps du moyeu, les quatre plis sont superposés, dans la partie du disque, la superposition est en moyenne de l'ordre de 2 plis avec une zones proche du centre où la superposition est entre 2 et trois plis et une zone périphérique où la superposition est majoritairement de deux plis et dans la partie formant la jante les plis sont juxtaposés sur la majeure partie des secteurs avec uniquement quelques zones de superposition.

Il est possible selon l'invention d'utiliser plus de 4 plis en réduisant l'angle de décalage entre les plis, par exemple 6 plis décalés de 30° ou 8 plis décalés de 22,5° sont possibles. Il est possible de déposer un plus grand nombre de plis en répétant un des motifs précédemment décrits ce qui permet notamment d'accroître la raideur de la partie centrale du moyeu et en jouant sur la largeur des bandes d'adapter le taux de superposition au niveau de la jante en fonction de la souplesse voulue.

Pour fixer le moyeu sur l'arbre, le corps de moyeu 2a comporte une découpe 5 de réception de l'arbre et le corps de moyeu 2a est réalisé par emboutissage de la partie centrale du moyeu en sorte de réaliser un tube de réception de l'arbre, le corps de moyeu étant relié à l'une de ses extrémités au disque 2b par une première courbure.

La jante 2c est réalisée par courbure de la périphérie du disque 2b.

La seconde courbure forme une liaison souple entre le disque 2b et la jante 2c conférant une module d'élasticité radial à la jante adapté pour permettre une déformation de celle-ci pour suivre les déformations de l'anneau de stockage 1 en rotation.

Sur la figure 3, dans la partie souple du moyeu correspondant à la zone 2c, l'épaisseur est réduite et le drapage est tel que le module circonférentiel ne soit pas trop élevé.

Ainsi on peut draper sur une largeur x qui ne recouvre pas toute la périphérie de la jante. De cette façon, il n'y a pas ou peu de fibres tangentes à la circonférence dans la partie souple.

La jante peut être réalisée en conservant la partie des plis sans aucun recouvrement ou, en détourant l'ébauche du moyeu on peut éliminer les parties externes à plis disjoints pour obtenir une jante continue. De plus, la raideur circonférentielle de la jante continue peut être ajustée en ajoutant circonférentiellement dans la partie jante des fibres bas module continues, comme par exemple des fibres de verre, ou des fibres de carbone bas module, voire très bas module. L'ajout de ces fibres bas module permet en outre d'éviter l'apparition de fissures dans la résine de la partie jante continue lors de la déformation de cette partie jante pendant la rotation de la roue.

Le moyeu est réalisé par drapage avec des plis 4 dont les fibres sont majoritairement orientées radialement par rapport au centre du moyeu.

Dans le cas de la figure 3 les fibres sont orientées selon la longueur des plis réalisés par des bandes longitudinales de forme générale rectangulaire.

Il est possible de réaliser les plis avec des bandes à bords longitudinaux incurvés vers l'intérieur ou vers l'extérieur pour adapter la souplesse de la jante.

Ainsi selon l'exemple, le corps de moyeu 2a est constitué d'une zone de recouvrement de l'ensemble des plis, le disque 2b est constitué par une zone recouvrement réduit des plis et la jante 2c est constituée par une zone de recouvrement minimal des plis.

Ceci permet de réduire progressivement par paliers la raideur du centre vers l'extérieur du moyeu.

De même, l'orientation des fibres des plis confère un module d'élasticité circonférentiel à la jante 2c adapté pour permettre une déformation de celle-ci pour suivre les déformations de l'anneau de stockage en rotation.

Près de l'axe, la rigidité est accrue par une épaisseur plus importante et avantageusement par l'addition de plis ou tissus composés de fibres à plus haut module.

En particulier, le corps de moyeu 2a s'étend jusqu'au rayon R1, le disque 2b aura s'étend du rayon R1 au rayon R2 et la jante s'étend du rayon R2 au rayon R3 et éventuellement au delà du rayon R3 si l'on conserve les parties de plis disjointes.

Le moyeu comprend une partie périphérique souple dont la raideur circonférentielle est réduite par rapport au centre du moyeu de façon à ce que la jante suive les déformations de l'anneau de stockage.

Selon la figure 5 plusieurs moyeux, au moins deux 2, 2', sont utilisés pour assurer une liaison parfaite entre l'axe et la roue en composite. Le nombre de ces moyeux est déterminé en fonction des modes de résonance de la roue dans la plage de vitesse de fonctionnement.

Les moyeux sont disposés dans le même sens pour éviter des phénomènes de contraintes en opposition au niveau des jantes.. Des moyeux disposés dans le même sens permettent d'obtenir des déformations de ces moyeux qui vont dans le même sens. Des déformations dans des sens opposés génèreraient du cisaillement à l'interface jante/roue de chaque moyeu.

Selon l'exemple représentée en figure 3, le moyeu est obtenu à partir d'un drapage à plat et d'une mise en forme avant polymérisation complète et pour fabriquer le moyeu:

- on réalise une ébauche plane du moyeu par dépose de plis composites 4a, 4b, 4c, 4d selon un motif produisant une épaisseur moyenne de l'ébauche se réduisant du centre vers la périphérie de l'ébauche,
- on découpe une ouverture centrale 5 dans l'ébauche;
- on réalise un emboutissage de l'ébauche dans un outil conformant l'ébauche en coupelle munie en son centre d'un corps de moyeu 2a annulaire et à sa périphérie d'une jante 2c et,
- on effectue une polymérisation du moyeu en forme.

Le moyeu après emboutissage et polymérisation est schématiquement représenté en figure 4.

Dans le cas où les plis composites 4a, 4b, 4c, 4d étant des bandes longitudinales, la dépose des plis composites se fait par pose des bandes centrées sur le centre du moyeu avec un décalage angulaire des bandes les unes par rapport aux autres.

Il est possible dans ce cas de réaliser-une étape de détourage de l'ébauche après emboutissage selon le rayon R3 pour éliminer les extrémités de plis disjointes.

L'emboutissage peut avoir lieu à chaud pour faciliter une déformation de l'ébauche en une forme non développable.

La polymérisation du moyeu est faite en forme dans un moule chauffant à matrice poinçon de formes complémentaires au moyeu terminé.

Un autre mode de réalisation préférentiel consiste à draper la pièce directement en forme avec le drapage de plis de forme rectangulaire ou trapézoïdale dans un moule ayant la forme d'un tore. Cela permet d'éviter l'étape d'emboutissage et permet de simplifier les outillages.

L'étape de détourage de l'ébauche est effectuée après dépose sur le moule pour éliminer les extrémités de plis disjointes. La polymérisation est alors faite sur le moule torique

Ensuite, dans les deux modes de réalisation, pour réaliser la roue, on emmanche le corps de moyeu 2a sur un arbre 3 de rotation de la roue.

L'arbre 3 peut notamment comporter une surface d'emmanchement conique pour faciliter le positionnement du moyeu sur l'arbre

De plus, comme représenté en figure 2, un frettage 6 du corps de moyeu sur l'axe peut être réalisé en utilisant une frette bobinée pour maintenir un contact serré sur l'axe.

Ensuite on emmanche l'anneau 1 de la roue sur la jante 2c du moyeu.

Les méthodes d'assemblage prévues tant au niveau de la liaison corps de moyeu/arbre que de la liaison jante/anneau comporte l'emmanchement en force, le collage et l'utilisation de techniques d'assemblage par dilatation différentielle par refroidissement d'une pièce et chauffage de l'autre.

Dans le cas d'une roue à plusieurs moyeux on emmanche l'anneau sur l'ensemble des moyeux disposés selon la même orientation comme représenté à la figure 5 où la roue comporte deux moyeux.

La roue à inertie de la présente invention concerne en premier lieu les producteurs et les distributeurs d'électricité et les régulateurs de réseau électriques. Cependant du fait de son bon rapport énergie/masse elle s'applique aussi à des applications aéronautiques et spatiales ou pour le transport terrestre.

Les diamètres visés sont de 500 mm à 1000 mm et un stockage envisagé de 5 à 15kWh.

La portée de l'invention n'est pas limitée par l'exemple représenté, une configuration basée sur une ébauche utilisant des plis sous forme de disques de diamètre croissant pouvant notamment être envisagée dans le cadre de l'invention.

**Revendications**

1. Roue d'inertie comportant un anneau de stockage (1) et un moyeu (2) reliant l'anneau de stockage (1) à un arbre (3) de rotation de la roue, **caractérisée en ce que** le moyeu (2), comportant une partie centrale formant un corps de moyeu (2a) de liaison avec l'arbre (3), une partie périphérique formant une jante (2c) de liaison avec l'anneau de stockage et une partie intermédiaire constituée d'un disque (2b) entre le corps de moyeu et la jante, est réalisé en matériau composite et comporte un module de raideur décroissant depuis le corps de moyeu vers la jante.

2. Roue d'inertie selon la revendication 1, **caractérisée en ce que** le moyeu (2) est réalisé par drapage et mise en forme de plis composites (4).

3. Roue d'inertie selon la revendication 2, **caractérisée en ce que** le drapage réalise un motif comportant un nombre de plis superposés moyen décroissant du corps de moyeu vers la partie périphérique de la jante.

4. Roue d'inertie selon la revendication 2 ou 3, **caractérisée en ce que** le drapage comporte une succession de plis (4a, 4b, 4c ,4d) décalés angulairement se recouvrant au moins dans la partie centrale du moyeu.

5. Roue d'inertie selon l'une quelconque des revendications précédentes, **caractérisée en ce que** le corps de moyeu (2a) comporte une découpe (5) de réception de l'arbre.

6. Roue d'inertie selon la revendication 5, **caractérisée en ce que** le corps de moyeu (2a) est réalisé par emboutissage de la partie centrale du moyeu.

7. Roue d'inertie l'une quelconque des revendications précédentes, **caractérisée en ce que** la jante (2c) est réalisée par courbure de la périphérie du disque (2b).

8. Roue d'inertie selon les revendications 6 et 7, **caractérisée en ce que** le corps de moyeu (2a) forme un tube, de réception de l'arbre (5), solidaire de l'arbre et est relié à l'une de ses extrémités au disque (2b) par une première courbure, la jante (2c) étant reliée au disque (2b) par une seconde courbure de même sens que la première courbure.

9. Roue d'inertie selon la revendication 8, **caractérisée en ce que** la seconde courbure forme une liaison souple entre le disque (2b) et la jante (2c) conférant une module d'élasticité radial à la jante adapté pour permettre une déformation de celle-ci pour suivre les déformations de l'anneau de stockage (1) en rotation.

10. Roue d'inertie selon l'une quelconque des revendications précédentes, **caractérisée en ce que** le moyeu est réalisé par drapage avec des plis (4) dont les fibres sont majoritairement orientées radialement par rapport au centre du moyeu.

**11.** Roue d'inertie selon la revendication 10, **caractérisée en ce que** le drapage est réalisé avec des plis (4a, 4b, 4c, 4d) formés par des bandes longitudinales disposées avec un décalage angulaire des unes par rapport aux autres et centrées sur le centre du moyeu.

**12.** Roue d'inertie selon la revendication 10, **caractérisée en ce que** les bandes longitudinales sont de forme générale rectangulaires voire trapézoïdale.

**13.** Roue d'inertie selon l'une quelconque des revendications précédentes, **caractérisée en ce que** le corps de moyeu (2a) est constitué d'une zone de recouvrement de l'ensemble des plis, le disque (2b) est constitué par une zone recouvrement réduit des plis et la jante (2c) est constituée par une zone de recouvrement minimal des plis.

**14.** Roue d'inertie selon l'une quelconque des revendications précédentes, **caractérisée en ce que** l'orientation des fibres des plis confère une module d'élasticité circonférentiel à la jante (2c) adapté pour permettre une déformation de celle-ci pour suivre les déformations de l'anneau de stockage en rotation.

**15.** Roue d'inertie selon l'une quelconque des revendications précédentes **caractérisée en ce que** le moyeu comprend une partie périphérique souple dont la raideur circonférentielle est réduite par rapport au centre du moyeu de façon à ce que la jante suive les déformations de l'anneau de stockage.

**16.** Procédé de réalisation d'une roue d'inertie comportant un moyeu en matériau composite selon l'une quelconque des revendications 1 à 15 **caractérisé en ce qu'**il comporte:

- une étape de réalisation d'une ébauche plane du moyeu par dépose de plis composites (4a, 4b, 4c, 4d) selon un motif produisant une épaisseur moyenne de l'ébauche se réduisant du centre vers la périphérie de l'ébauche,
- une étape de découpe d'une ouverture centrale (5) dans l'ébauche;
- une étape d'emboutissage de l'ébauche dans un outil conformant l'ébauche en coupelle munie en son centre d'un corps de moyeu (2a) annulaire et à sa périphérie d'une jante (2c) et,
- une étape de polymérisation du moyeu.

**17.** Procédé selon la revendication 16 **caractérisé en ce que** les plis composites (4a, 4b, 4c, 4d) étant des bandes longitudinales, la dépose des plis composites se fait par pose des bandes centrées sur le centre du moyeu avec un décalage angulaire des bandes les unes par rapport aux autres.

**18.** Procédé selon la revendication 17 **caractérisé en ce que** après l'étape d'emboutissage on réalise une étape de détourage de l'ébauche.

**19.** Procédé de réalisation d'une roue d'inertie comportant un moyeu en matériau composite selon l'une quelconque des revendications 1 à 15 **caractérisé en ce qu'**il comporte:

- une étape de réalisation d'une ébauche du moyeu par dépose de plis composites (4a, 4b, 4c, 4d) selon un motif produisant une épaisseur moyenne de l'ébauche se réduisant du centre vers la périphérie de l'ébauche sur un moule torique conformant l'ébauche en coupelle munie en son centre d'un corps de moyeu (2a) annulaire et à sa périphérie d'une jante (2c),
- une étape de découpe d'une ouverture centrale (5) dans l'ébauche; et
- une étape de polymérisation du moyeu.

**20.** Procédé selon l'une quelconque des revendications 16 à 19 **caractérisé en ce qu'**il comporte une étape d'emmanchement du corps de moyeu (2a) sur un arbre (3) de rotation de la roue.

**21.** Procédé selon la revendication 20 **caractérisé en ce qu'**il comporte une étape de frettage (6) du corps de moyeu sur l'arbre.

**22.** Procédé selon la revendication 20 ou 21 **caractérisé en ce qu'**il comporte une étape d'emmanchement de l'anneau (1) de la roue sur la jante (2c) du moyeu.

**23.** Procédé selon la revendication 22 **caractérisé en ce qu'**il comporte une étape d'emmanchement d'au moins un second moyeu (2') de même orientation sur l'arbre et dans l'anneau.

**Patentansprüche**

1. Schwungrad, das einen Speicherring (1) und eine den Speicherring (1) mit einer Drehwelle (3) des Rads verbindende Nabe (2) umfasst, **dadurch gekennzeichnet, dass** die Nabe (2), die einen einen Nabenkörper (2a) bildenden mittleren Teil zur Verbindung mit der Welle (3), einen eine Felge (2c) bildenden Umfangsteil zur Verbindung mit dem Speicherring und einen aus einer Scheibe (2b) bestehenden Zwischenteil zwischen dem Nabenkörper und der Felge umfasst, aus einem Verbundmaterial hergestellt ist und einen Steifigkeitsmodul umfasst, der vom Nabenkörper zur Felge hin abnimmt.

2. Schwungrad nach Anspruch 1, **dadurch gekennzeichnet, dass** die Nabe (2) durch Drape-Formling und Formen von Verbundlagen (4) hergestellt wird.

3. Schwungrad nach Anspruch 2, **dadurch gekennzeichnet, dass** das Drape-Forming ein Muster erzeugt, das eine durchschnittliche Anzahl von übereinandergelegten Lagen umfasst, die vom Nabenkörper zum Umfangsteil der Felge hin abnimmt.

4. Schwungrad nach Anspruch 2 oder 3, **dadurch gekennzeichnet, dass** das Drape-Forming eine Folge von Lagen (4a, 4b, 4c, 4d) umfasst, die in einem Winkel versetzt sind und mindestens im mittleren Teil der Nabe überlappen.

5. Schwungrad nach einem der vorhergehenden Ansprüche, **dadurch gekennzeichnet, dass** der Nabenkörper (2a) einen Ausschnitt (5) zur Aufnahme der Welle umfasst.

6. Schwungrad nach Anspruch 5, **dadurch gekennzeichnet, dass** der Nabenkörper (2a) durch Pressen des mittleren Teils der Nabe hergestellt wird.

7. Schwungrad nach einem der vorhergehenden Ansprüche, **dadurch gekennzeichnet, dass** die Felge (2c) durch Krümmen des Umfangs der Scheibe (2b) hergestellt wird.

8. Schwungrad nach den Ansprüchen 6 und 7, **dadurch gekennzeichnet, dass** der Nabenkörper (2a) ein Rohr zur Aufnahme der Welle (5) bildet, das mit der Welle fest verbunden und durch eine erste Krümmung an einem seiner Enden mit der Scheibe (2b) verbunden ist, wobei die Felge (2c) durch eine zweite Krümmung in derselben Richtung wie die erste Krümmung mit der Scheibe (2b) verbunden ist.

9. Schwungrad nach Anspruch 8, **dadurch gekennzeichnet, dass** die zweite Krümmung eine flexible Verbindung zwischen der Scheibe (2b) und der Felge (2c) bildet, wodurch der Felge ein radialer Elastizitätsmodul verliehen wird, der dahingehend ausgelegt ist, eine Verformung der Felge, um den Verformungen des rotierenden Speicherrings (1) zu folgen, zu gestatten.

10. Schwungrad nach einem der vorhergehenden Ansprüche, **dadurch gekennzeichnet, dass** die Nabe durch Drape-Forming mit Lagen (4), deren Fasern hauptsächlich radial bezüglich der Mitte der Nabe ausgerichtet sind, hergestellt wird.

11. Schwungrad nach Anspruch 10, **dadurch gekennzeichnet, dass** das Drape-Forming mit Lagen (4a, 4b, 4c, 4d) hergestellt wird, die durch Längsstreifen gebildet werden, die mit einem Winkelversatz zueinander angeordnet und auf der Mitte der Nabe zentriert sind.

12. Schwungrad nach Anspruch 10, **dadurch gekennzeichnet, dass** die Längsstreifen allgemein rechteckig oder sogar trapezförmig sind.

13. Schwungrad nach einem der vorhergehenden Ansprüche, **dadurch gekennzeichnet, dass** der Nabenkörper (2a) aus einem Bereich des Überlappens aller Lagen besteht, wobei die Scheibe (2b) aus einem Bereich des verringerten Überlappens der Lagen besteht und die Felge (2c) aus einem Bereich des minimalen Überlappens der Lagen besteht.

14. Schwungrad nach einem der vorgehenden Ansprüche, **dadurch gekennzeichnet, dass** die Ausrichtung der Fasern der Lagen der Felge (2c) einen umfänglichen Elastizitätsmodul verleiht, der dahingehend ausgelegt ist, eine Verformung der Felge, um den Verformungen des rotierenden Speicherrings zu folgen, zu gestatten.

15. Schwungrad nach einem der vorhergehenden Ansprüche, **dadurch gekennzeichnet, dass** die Nabe einen flexiblen Umfangsteil umfasst, dessen Umfangssteifigkeit bezüglich der Mitte der Nabe reduziert ist, so dass die Felge den Verformungen des Speicherrings folgt.

16. Verfahren zur Herstellung eines eine Nabe aus Verbundmaterial umfassenden Schwungrads nach einem der Ansprüche 1-15, **dadurch gekennzeichnet, dass** es Folgendes umfasst:

- einen Schritt der Herstellung eines planaren Rohlings der Nabe durch Auflegen von Verbundlagen (4a, 4b, 4c, 4d) nach einem Muster, das eine durchschnittliche Dicke des Rohlings, die von der Mitte zum Umfang des Rohlings hin abnimmt, erzeugt,
- einen Schritt des Schneidens einer mittleren Öffnung (5) in den Rohling;
- einen Schritt des Pressens des Rohlings in einem Werkzeug, wodurch der Rohling in einen Napf umgewandelt wird, der in seiner Mitte einen ringförmigen Nabenkörper (2a) und an seinem Umfang eine Felge (2c) aufweist, und
- einen Schritt der Polymerisation der Nabe.

17. Verfahren nach Anspruch 16, **dadurch gekennzeichnet, dass** die Verbundlagen (4a, 4b, 4c, 4d) Längsstreifen sind, wobei das Auflegen der Verbundlagen durch zentriertes Legen der Streifen auf die Mitte der Nabe mit einem Winkelversatz der Streifen zueinander erfolgt.

18. Verfahren nach Anspruch 17, **dadurch gekennzeichnet, dass** nach dem Schritt des Pressens ein Schritt des Beschneidens des Rohlings durchgeführt wird.

19. Verfahren zur Herstellung eines eine Nabe aus Verbundmaterial umfassenden Schwungrads nach einem der Ansprüche 1-15, **dadurch gekennzeichnet, dass** es Folgendes umfasst:

- einen Schritt der Herstellung eines Rohlings der Nabe durch Auflegen von Verbundlagen (4a, 4b, 4c, 4d) nach einem Muster, das eine durchschnittliche Dicke des Rohlings, die von der Mitte zum Umfang des Rohlings hin abnimmt, erzeugt, auf eine torusförmige Form, wodurch der Rohling in einen Napf umgewandelt wird, der in seiner Mitte einen ringförmigen Nabenkörper (2a) und an seinem Umfang eine Felge (2c) aufweist,
- einen Schritt des Schneidens einer mittleren Öffnung (5) in den Rohling; und
- einen Schritt der Polymerisation der Nabe.

20. Verfahren nach einem der Ansprüche 16-19, **dadurch gekennzeichnet, dass** es einen Schritt des Zusammenpassens des Nabenkörpers (2a) mit einer Drehwelle (3) des Rads umfasst.

21. Verfahren nach Anspruch 20, **dadurch gekennzeichnet, dass** es einen Schritt des Aufschrumpfens (6) des Nabenkörpers auf die Welle umfasst.

22. Verfahren nach Anspruch 20 oder 21, **dadurch gekennzeichnet, dass** es einen Schritt des Zusammenpassens des Rings (1) des Rads mit der Felge (2c) der Nabe umfasst.

23. Verfahren nach Anspruch 22, **dadurch gekennzeichnet, dass** es einen Schritt des Zusammenpassens mindestens einer zweiten Nabe (2') derselben Ausrichtung mit der Welle und im Ring umfasst.

**Claims**

1. Inertia wheel including a storage ring (1) and a hub (2) connecting the storage ring (1) to a rotation shaft (3) of the wheel, **characterized in that** the hub (2), including a central portion forming a hub body (2a) connected to the shaft (3), a peripheral portion forming a rim (2c) connected to the storage ring and an intermediate part consisting of a disk (2b) between the hub body and the rim, is made from composite material and has a stiffness modulus decreasing from the hub body to the rim.

2. Inertia wheel according to Claim 1, **characterized in that** the hub (2) is produced by drape forming and shaping composite plies (4).

3. Inertia wheel according to Claim 2, **characterized in that** the drape forming produces a pattern including an average number of superposed plies decreasing from the hub body to the peripheral portion of the rim.

**4.** Inertia wheel according to Claim 2 or 3, **characterized in that** the drape forming includes a succession of plies (4a, 4b, 4c, 4d) offset angularly and overlapping at least in the central portion of the hub.

**5.** Inertia wheel according to any one of the preceding claims, **characterized in that** the hub body (2a) includes a cut-out (5) to receive the shaft.

**6.** Inertia wheel according to Claim 5, **characterized in that** the hub body (2a) is produced by pressing the central portion of the hub.

**7.** Inertia wheel according to any one of the preceding claims, **characterized in that** the rim (2c) is produced by curving the periphery of the disk (2b).

**8.** Inertia wheel according to Claims 6 and 7, **characterized in that** the hub body (2a) forms a tube to receive the shaft (5) fastened to the shaft and is connected to the disk (2b) at one of its ends by a first curve, the rim (2c) being connected to the disk (2b) by a second curve in the same sense as the first curve.

**9.** Inertia wheel according to Claim 8, **characterized in that** the second curve forms a flexible connection between the disk (2b) and the rim (2c) conferring on the rim a radial modulus of elasticity adapted to allow deformation thereof to follow the deformations of the rotating storage ring (1).

**10.** Inertia wheel according to any one of the preceding claims, **characterized in that** the hub is produced by drape forming with plies (4) the fibers of which are for the most part oriented radially relative to the center of the hub.

**11.** Inertia wheel according to Claim 10, **characterized in that** the drape forming is carried out with plies (4a, 4b, 4c, 4d) formed by longitudinal strips disposed with an angular offset relative to one another and centered on the center of the hub.

**12.** Inertia wheel according to Claim 10, **characterized in that** the longitudinal strips are of rectangular or even trapezoidal general shape.

**13.** Inertia wheel according to any one of the preceding claims, **characterized in that** the hub body (2a) consists of an area of overlapping of all the plies, the disk (2b) consists of an area of reduced overlapping of the plies, and the rim (2c) consists of an area of minimum overlapping of the plies.

**14.** Inertia wheel according to any one of the preceding claims, **characterized in that** the orientation of the fibers of the plies confers on the rim (2c) a circumferential modulus of elasticity adapted to allow deformation thereof to follow the deformations of the rotating storage ring.

**15.** Inertia wheel according to any one of the preceding claims **characterized in that** the hub includes a flexible peripheral portion the circumferential stiffness of which is reduced relative to the center of the hub so that the rim follows the deformations of the storage ring.

**16.** Method of producing an inertial wheel according to any one of Claims 1 to 15 including a composite material hub, **characterized in that** it includes:

- a step of producing a plane blank of the hub by depositing composite plies (4a, 4b, 4c, 4d) in accordance with a pattern producing a mean thickness of the blank decreasing from the center to the periphery of the blank,
- a step of cutting a central opening (5) in the blank,
- a step of pressing the blank in a tool conforming the blank into a cup having at its center an annular hub body (2a) and at its periphery a rim (2c), and
- a step of polymerizing the hub.

**17.** Method according to Claim 16 **characterized in that**, the composite plies (4a, 4b, 4c, 4d) being longitudinal strips, the composite plies are deposited by placing strips centered on the center of the hub with an angular offset of the strips relative to one another.

**18.** Method according to Claim 17 **characterized in that** a step of trimming the blank is carried out after the pressing step.

19. Method of producing an inertia wheel according to any one of Claims 1 to 15 including a composite material hub, **characterized in that** it includes:

- a step of producing a plane blank of the hub by depositing composite plies (4a, 4b, 4c, 4d) in accordance with a pattern producing a mean thickness of the blank decreasing from the center to the periphery of the blank on a mold in the shape of a torus conforming the blank into a cup having at its center an annular hub body (2a) and at its periphery a rim (2c),
- a step of cutting a central opening (5) in the blank, and
- a step of polymerizing the hub.

20. Method according to any one of Claims 16 to 19 **characterized in that** it includes a step of mating the hub body (2a) to a rotation shaft (3) of the wheel.

21. Method according to Claim 20 **characterized in that** it includes a step (6) of binding the hub body onto the shaft.

22. Method according to Claim 20 or 21 **characterized in that** it includes a step of mating the ring (1) of the wheel to the rim (2c) of the hub.

23. Method according to Claim 22 **characterized in that** it includes a step of mating at least one second hub (2') with the same orientation to the shaft and to the ring.

1

Rext

Rint

**Fig. 1**

1

2c

6

3

2a

2

2b

2c

**Fig. 2**

**Fig. 3**

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005021379 A1
- WO 2009047218 A1
- WO 03026882 A1
- WO 0237201 A1